# EUROPÄISCHE PATENTSCHRIFT

(11) **EP 0 803 631 B1**
(45) Veröffentlichungstag und Bekanntmachung des Hinweises auf die Patenterteilung: **15.06.2005**
(21) Anmeldenummer: 97250140.7
(22) Anmeldetag: 24.04.1997
(51) Int. Cl.: E05F 15/12, F16H 25/24

(54) **Vorrichtung zum Betätigen von einseitig angelenkten Bauteilen**
Control device for construction elements being pivotally linked on one side
Dispositif de commande pour éléments de construction articulés d'un côté

(30) Priorität: 24.04.1996 DE 19617875
(43) Veröffentlichungstag der Anmeldung: 29.10.1997
(73) Patentinhaber: Brose Fahrzeugteile GmbH & Co. KG, 96450 Coburg (DE)
(72) Erfinder: Sesselmann, Helmut, Dr., 96523 Steinach (DE); Rampel, Hans, 96482 Ahorn (DE)
(74) Vertreter: Ninnemann, Detlef, Dipl.-Ing.

(56) Entgegenhaltungen:
- GB-A- 739 346
- US-A- 1 456 468
- US-A- 4 186 524

## Beschreibung

Die Erfindung bezieht sich auf eine Vorrichtung zum Betätigen von einseitig angelenkten Bauteilen wie Ausstellfenster, Hubdächer oder dgl. gemäß dem Oberbegriff der Ansprüche 1, 4 und 9.

Zur elektromotorischen Betätigung von einseitig angelenkten Bauteilen wie Ausstellfenster, Hubdächer oder dgl. sind verschiedene Antriebssysteme bekannt. Beispielsweise zeigt die DE 35 00 874 C2 eine Ausstellvorrichtung, bei der die Antriebseinheit mit einem an der Scheibe angelenkten Stößel verbunden ist, der aus einer bogenförmig gekrümmten Schubstange besteht, die teilweise als Zahnsegment ausgebildet ist, deren Verzahnung in Eingriff mit einem elektromotorisch angetriebenen Ritzel steht. Zum Spielausgleich beim Öffnen und Schließen der um eine Achse verschwenkbaren Scheibe ist die Schubstange auf einer Teillänge verschiebbar beweglich geführt.

Die bekannte Ausstellvorrichtung erfordert speziell geformte Bauteile sowie infolge der Krümmung der Schubstange ein erhebliches Bauvolumen, was hohe Herstellkosten und eine eingeschränkte Anwendung zur Folge hat.

Aus der US 4 186 524 ist eine Ausstellvorrichtung bekannt, bei der die Drehbewegung des Elektromotors in eine Linearbewegung mittels eines Schraubengetriebes umgesetzt wird, das aus einer mit der Motorwelle verbundenen Schnecke und einem mit der Schnecke kämmenden Schneckenrad als Spindelmutter sowie einer von der Spindelmutter angetriebenen Spindel besteht. Die Spindel ist mit einem Drahtkabel verbunden, das zu einer mit der Ausstellscheibe verbundenen Verstelleinrichtung führt. Durch die Verbindung der Motor-Getriebeeinheit zum Ausstellfenster mittels eines Drahtkabels ist eine beliebige Anordnung der Motor-Getriebeeinheit möglich, die Herstellungskosten für die aufwendige Drahtkabelverbindung sind wegen der hohen mechanischen Anforderungen an das Drahtkabel allerdings erheblich.

Aus der JP 53-83220 A ist eine Betätigungsvorrichtung für ein Fahrzeug-Ausstellfenster bekannt, bei der die elektromotorisch angetriebene Betätigungsvorrichtung an der Karosserie in unmittelbarer Nähe der Anlenkung an das Ausstellfenster angeordnet ist. Die Betätigungsvorrichtung besteht aus einem Elektromotor, dessen Motorwelle mit einer Schnecke verbunden ist, die mit dem Schneckenrad eines Schraubengetriebes kämmt, wobei das Schneckenrad starr in einem Getriebegehäuse gelagert ist und eine teleskopförmig ausfahrbare Spindel linear bewegt.

Diese bekannte Betätigungsvorrichtung gestattet infolge der karosseriefesten Anlenkung des Linearantriebs und des starren Schraubengetriebes keine Bewegung der Antriebseinheit, so daß ein Ausgleich der bogenförmigen Bewegungsbahn des Verstellelements des Ausstellfensters in bezug auf die lineare Bewegung des Antriebssystems nur durch eine entsprechend bewegliche Verbindung zwischen dem Ende der Spindel und der Verstellvorrichtung erfolgen kann. Dadurch ist eine manuelle Notbetätigung bei Ausfall des Antriebssystems nicht oder nur mit erheblichem konstruktivem Aufwand möglich und die Einsatzmöglichkeiten in bezug auf die Karosserieanbindung und die Anordnung der Spindel zur Scheibe sind eingeschränkt.

Die US-1,456,468 beschreibt eine Betätigungseinrichtung für ein schwenkbares Fenster, bei dem mittels eines handbetriebenen Kegelradgetriebes eine Spingelmutter angetrieben wird. Die Spindelmutter ist drehbeweglich in einem um eine Achse schwenkbaren Gehäuse gelagert und verschiebt bei Drehung des Kegelradgetriebes die Spindel linear, so daß ein mit einem Ende der Spindel verbundenes Fenster je nach Drehrichtung geöffnet oder geschlossen wird.

Aus der GB-A-0739 346 ist eine Vorrichtung zum Öffnen von Ausstellfenstern mit einer einseitig an dem Fenster gelagerten Spindel bekannt. Die Spindel ist in einer Spindelmutter gelagert, die ihrerseits als Schneckenrad ausgebildet ist und von einer Schnecke angetrieben wird. Die Spindelmutter ist dabei über eine kugelförmige Lagerung in einer Ebene verschwenkbar gelagert.

Aufgabe der vorliegenden Erfindung ist es, eine Vorrichtung zum Betätigen von einseitig angelenkten Bauteilen der eingangs genannten Gattung zu schaffen, die eine beliebige Lage des Linearantriebs in Bezug auf das zu betätigende Bauteil ermöglicht, die mit geringem Aufwand herstell- und einbaubar ist und die eine manuelle Notbetätigung mit geringem konstruktiven Aufwand in einfacher Weise gewährleistet.

Die Aufgabe wird erfindungsgemäß durch eine Vorrichtung mit den Merkmalen der Ansprüche 1, 4 oder 9 gelöst.

Infolge der schwenkbaren Lagerung der Spindelmutter im Getriebegehäuse ist die Spindel in bezug auf die Verbindung zum einseitig angelenkten Bauteil beweglich angeordnet und ermöglicht damit eine einfache Anbindung an das zu betätigende Bauteil sowie im Notfall eine manuelle Betätigung, ohne daß ein größerer konstruktiver Aufwand für die Notbetätigung erforderlich ist und eine aufwendige Handhabung erforderlich macht.

Weiterhin kann die Spindel unabhängig von der Karosserieanbindung des zu betätigenden Bauteils um 360° geschwenkt werden und somit der Linearantrieb in eine zum zu betätigenden Bauteil günstige Lage positioniert werden. Ein weiterer Vorteil der schwenkbaren Anordnung der Spindelmutter und Spindel besteht in der einfachen konstruktiven Anordnung eines Endlagenschalters, der die Auslenkung der schwenkbaren Spindellagerung ausnutzt.

In einer ersten Variante ist die Spindelmutter zur Realisierung der Schwenkbewegung in mindestens einer Ebene einteilig ausgebildet und weist eine Außenverzahnung auf, die über mindestens einen dem Schwenkwinkel entsprechenden Sektor kreisbogenförmig ausgebildet ist und mit einem mit der Motorwelle verbundenen Verzahnungselement in Eingriff steht, wobei die Spindelmutter eine sphärische Lagerfläche aufweist, die in mehreren, am Getriebegehäuse angeordneten Lagerbuchsen abgestützt ist.

Diese einfache Ausführungsform gewährleistet eine Drehbewegung in einer Ebene bei gleichzeitiger Sicherung des Eingriffs der Außenverzahnung der Spindelmutter in das mit dem elektromotorischen Antrieb verbundene Verzahnungselement. Weiterehin ist die dreh- und schwenkbare Lagerung der Spindelmutter gewährleistet, wobei das Gleit- und Schwenklager eine funktionelle Einheit bilden.

Zur Realisierung einer begrenzten Drehbewegung in einer Ebene ist die Spindelmutter in einem Drehkranz angeordnet, der um eine senkrecht auf der Spindelachse stehenden Achse schwenkbar im Getriebegehäuse gelagert ist.

Weiterhin kann eine Verdrehsicherung vorgesehen werden, die die Bewegung der einteiligen Spindelmutter in einer Ebene sperrt.

In einer zweiten Variante mit einer zweiteiligen Spindelmutter weist ein erstes Spindelmutterelement die mit dem Verzahnungselement des elektromotorischen Antriebs in Eingriff stehende Verzahnung auf, während ein zweites Spindelmutterelement die mit der Spindel in Eingriff stehende Verzahnung aufweist. Beide Spindelmutterelemente sind formschlüssig miteinander verbunden, wobei das erste Spindelmutterelement aus einem ersten Kegelrad besteht, dessen Kegelverzahnung in Eingriff mit der Kegelverzahnung eines das zweite Spindelmutterelement bildenden zweiten Kegelrades steht, dessen Drehachse senkrecht zur Drehachse des ersten Kegelrades angeordnet ist und das in einem Schwenkkörper gelagert ist, dessen Achse mit der Achse des ersten Kegelrades fluchtet.

In dieser Ausführungsform wird anstelle eines Schneckengetriebes ein Stirnradgetriebe verwendet, das einen besseren Wirkungsgrad aufweist und demzufolge geringere Antriebsleistungen erforderlich macht. Auch bei einem Stirnradgetriebe kann die volle Spindelbeweglichkeit in einer Ebene gewährleistet werden, wobei das Bauvolumen des Linearantriebs minimal gestaltet werden kann. Um den Wirkungsgrad noch zu verbessern, ist es sinnvoll, das auf der Spindel sitzende Kegelrad durch ein reibungsarmes Lager, z.B. ein Kugellager, axial abzustützen.

Der Schwenkkörper kann schwenkbar an den Gehäusehälften des Getriebegehäuses gelagert und mittels einer Druckfeder an der einen Getriebegehäusehälfte abgestützt werden.

Das erste Kegelrad kann eine zylindrische Außen- oder Innenverzahnung aufweisen, die mit einem mit der Motorwelle verbundenen Ritzel kämmt.

Das erste Spindelmutterelement kann auch aus einem ersten Kegelrad mit integriertem Schneckenrad bestehen, dessen Schneckenverzahnung mit einer mit der Motorwelle verbundenen Schnecke kämmt.

In einer Ausgestaltung der beiden vorstehend beschriebenen Varianten ist die Spindelmutter in einem am Getriebegehäuse abgestützten Gleit- und/oder Schwenklager, vorzugsweise in einem kombinierten Gleit- und Schwenklager angeordnet.

Die Anordnung der Spindelmutter in einem am Getriebegehäuse abgestützten Gleit- und Schwenklager ermöglicht eine begrenzte Drehbewegung auf mindestens einer Ebene, wobei diese durch ein kombiniertes Gleit- und Schwenklager eine integrierende Funktion durch Bildung einer funktionellen Einheit von Gleitlager und Schwenklager erzielt.

In einer dritten Variante ist die Außenverzahnung der Spindelmutter über mindestens einen dem Schwenkwinkel entsprechenden Sektor kreisbogenförmig ausgebildet, steht mit einem mit der Motorwelle verbundenen Verzahnungselement in Eingriff und ist in einem Drehkranz angeordnet, der um eine senkrecht auf der Spindelachse stehenden Achse schwenkbar im Getriebegehäuse gelagert ist. Der Drehkranz ist entweder zweiteilig und konisch oder zylindrisch ausgebildet, wobei beim Zusammenbau die die Spindelmutter umfassenden beiden Teile des Drehkranzes bei getrenntem Getriebegehäuse zusammen mit der Spindelmutter in die eine Gehäusehälfte einsetzbar sind.

Die zweiteilige, konische Ausgestaltung des Drehkranzes sichert die Winkelbeweglichkeit der Spindel und ermöglicht eine leichte Montage des Drehkranzes in Verbindung mit dem Schneckenrad und der Spindel in eine Gehäusehälfte des zweiteilig aufgebauten Getriebehäuses.

Die erfindungsgemäßen Lösungen eignen sich zur Integration einer Notbetätigungseinrichtung, mittels der ein mit der Spindel kraft- und/oder formschlüssig sowie mit dem einseitig angelenkten Bauteil verbundenes Verstellrad zur manuellen Betätigung freigebbar ist, so daß im Falle eines defekten Linearantriebs das zu betätigende Bauteil geschlossen werden kann.

Die Notbetätigungseinrichtung kann entweder einen Entriegelungshebel enthalten, der im Automatikbetrieb an einem mit der Spindel verbundenen und formschlüssig in das Verstellrad eingesetzten Vierkant anliegt und zum manuellen Betrieb aus der Anlagestellung zur Freigabe des Vierkants verschwenkbar ist, oder ein Entriegelungselement aufweisen, das im Automatikbetrieb in eine Aufnahme eingesetzt ist und an einem kugelförmigen Ende der Spindel oder eines mit der Spindel verbundenen Verstellrades kraft- und/oder formschlüssig anliegt und zum manuellen Betrieb aus der Anlagestellung zur Freigabe der Spindel bzw. des Verstellrades aus der Aufnahme herausziehbar ist.

Weiterhin können die Spindelmutter, die Spindel oder ein mit der Spindelmutter verbundenes Verschwenkelement mit einer Einrichtung zur Endlagenabschaltung verbunden werden. Zur Erzielung einer Bewegung des Systems in zwei oder drei Ebenen kann der Linearantrieb in mindestens einer Ebene verschwenkbar angelenkt oder kardanisch aufgehängt werden.

Anhand von in der Zeichnung dargestellten Ausführungsbeispielen soll der der Erfindung zugrunde liegende Gedanke näher erläutert werden. Es zeigen:
- Fig. 1 -: einen Längsschnitt durch einen Linearantrieb mit einem als Schneckengetriebe ausgeführten Schraubengetriebe mit konischem Drehkranz;
- Fig. 2 -: einen Schnitt durch den Linearantrieb gemäß Figur 1 entlang der Linie A - A;
- Fig. 3 -: einen Schnitt durch den Linearantrieb gemäß Figur 1 entlang der Linie B - B;
- Fig. 4 -: einen Längsschnitt durch ein mit einem Ausstellfenster verbundenes Spindelgetriebe und einer Notbetätigungseinrichtung;
- Fig. 5 -: eine Variante einer Notbetätigungseinrichtung;
- Fig. 6 -: einen Schnitt durch die Notbetätigungseinrichtung der Figur 5 entlang der Linie A - A;
- Fig. 7 -: einen Längsschnitt durch ein mit einem Ausstellfenster verbundenes Spindelgetriebe mit einem Schneckenrad-Kalotten-System;
- Fig. 8 -: einen Längsschnitt durch einen Linearantrieb mit einem Kegelrad-Spindelgetriebe mit Außenverzahnung des ersten Kegelrades;
- Fig. 9 -: einen Längsschnitt durch einen Linearantrieb entsprechend Figur 8 mit einer Innenverzahnung des ersten Kegelrades;
- Fig. 10 -: einen Längsschnitt durch ein Spindelgetriebe entsprechend den Figuren 8 und 9 mit einer Schneckenstufe zur Verbindung mit dem Antriebsmotor;
- Fig. 11 -: einen Längsschnitt durch einen Teil eines Spindelgetriebes zur schematischen Darstellung einer Variante eines Endlagenschalters und
- Fig. 12 -: eine schematische Darstellung eines Endlagenschalters mit schwenkbarem Gleitlager und Führungszapfen.

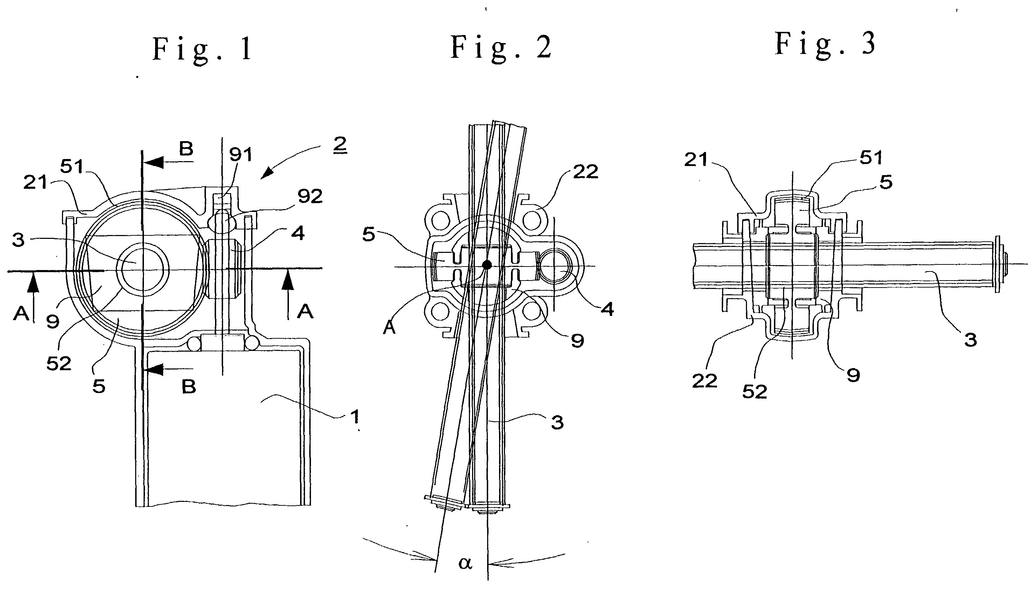

In Figur 1 ist ein Längsschnitt durch einen Linearantrieb dargestellt, der aus einem Antriebsmotor 1 und einem Schraubengetriebe 2 besteht. Das Schraubengetriebe 2 enthält eine mit der Motorwelle verbundene Schnecke 4, die mit einem Schneckenrad 5 kämmt. Das Schneckenrad 5 weist eine Außenverzahnung 51 auf, die in die Schneckenverzahnung der Schnecke 4 eingreift sowie eine Innenverzahnung 52, die mit der Verzahnung einer Spindel 3 in Eingriff steht. Ein Ende der Spindel 3 ist mit einem nicht näher dargestellten einseitig angelenkten Bauteil wie beispielsweise einem Ausstellfenster oder einem Hubdach insbesondere eines Kraftfahrzeugs verbunden.

Das Schraubengetriebe 2 wandelt die Rotations-Antriebsbewegung des Antriebsmotors 1 infolge der Anbindung der Spindel 3 an dem auszulenkenden Bauteil in eine axiale, d.h. lineare Schubbewegung um, so daß durch Drehung der Schnecke 4 und des mit der Schnecke 4 in Eingriff befindlichen Schnekkenrades 5 die Spindel 3 senkrecht zur Zeichnungsebene bewegt wird.

Die Schnecke 4 ist über eine Kalotte 92 und eine axiale Anfederung 91 spielfrei und mit Axialspielausgleich versehen gelagert.

Zur Realisierung einer begrenzten Drehbewegung der aus dem Schneckenrad 5 bestehenden Spindelmutter des Schraubengetriebes 2 und damit der Spindel 3 in einer Ebene ist ein konischer, zweiteiliger Drehkranz 9 vorgesehen, dessen Aufbau den Schnittdarstellungen der Figuren 2 und 3 entnommen werden kann, wobei Figur 2 einen Schnitt entlang der Linie A - A der Figur 1 und Figur 3 einen Schnitt entlang der Linie B - B der Figur 1 zeigt.

Figur 2 zeigt die Spindel 3 in ihrer Grundstellung sowie um einen Winkel α nach beiden Seiten zur Grundstellung ausgelenkt (schematisch durch gestrichelte Spindel-Mittellinien dargestellt), wobei die Drehbewegung der Spindel 3 um die senkrecht zur Zeichnungsebene verlaufende Achse A erfolgt.

Der in dieser Schnittdarstellung ersichtliche symmetrische Aufbau des konischen Drehkranzes 9 verdeutlicht die Winkelbeweglichkeit des Schneckenrad-Spindelsystems in dieser Zeichnungsebene, wobei infolge der kreisbogenförmigen Ausgestaltung der Außenverzahnung des Schneckenrades 5 ein gleichbleibender Eingriff in die Schneckenverzahnung der Schnecke 4 über den Bereich der Winkelbeweglichkeit des Spindel-Schneckenrad-Systems gewährleistet wird.

Figur 3 verdeutlicht den Aufbau des zweiteiligen, konischen Drehkranzes sowie den hierdurch bedingten leichten Einbau des Schraubengetriebes 2 in das aus zwei Gehäusehälften 21, 22 bestehenden Getriebegehäuses. Zum Einbau des Schraubengetriebes 2 wird die Verbindung des Schneckenrades 5 mit den beiden Teilen des konischen Drehkranzes 9 in das Gehäuseunterteil 22 eingesetzt und anschließend das Schraubengetriebe 2 mittels des Gehäusedeckels 21 geschlossen. Anschließend wird die Spindel 3 in das Innengewinde 52 des Schnekkenrades 5 eingeschraubt und deren eines Ende mit dem einseitig angelenkten Bauteil verbunden.

Selbstverständlich kann anstelle eines konischen, zweiteiligen Drehkranzes auch ein zylindrischer Drehkranz mit gleichen oder unterschiedlichen Drehkranzdurchmessern verwendet werden, der in gleicher Weise die Winkelbeweglichkeit der Spindel entsprechend der Darstellung gemäß Figur 2 ermöglicht.

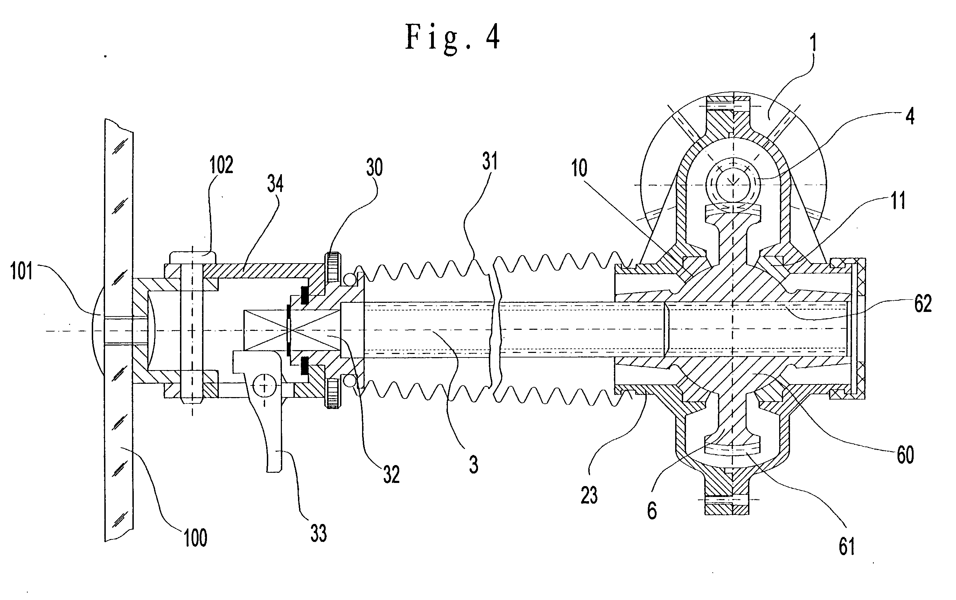

Figur 4 zeigt ein zweites Ausführungsbeispiel eines Schraubengetriebes im Längsschnitt, das ebenfalls eine Drehbewegung und damit ein Schwenken der Spindel ermöglicht. Das Schraubengetriebe 2 besteht in dieser Ausführungsform aus einem Schnekkenrad 6, dessen Außenverzahnung 61 mit der Schneckenverzahnung einer Schnecke 4 kämmt, die mit der Motorwelle eines Antriebsmotors 1 verbunden ist. Das in dieser Ausführungsform einteilige Schneckenrad 6 ist als Kalotte mit sphärischen Flächen 60 ausgebildet, die in den sphärischen Flächen 60 angepaßten Lagerbuchsen 11 gegen das Getriebegehäuse 23 abgestützt sind und zusammen mit diesen ein Gleit- und Schwenklager 10 bilden.

Das Innengewinde 62 des Schneckenrades 6 steht in Eingriff mit dem Gewinde einer Spindel 3, die über einen Vierkant 32 mit einem Verstellrad 30 verbunden ist. Eine Manschette 31 verbindet das Getriebegehäuse 23 mit dem Verstellrad 30, so daß in diesem Bereich die Spindel 3 abgedeckt ist. Das Verstellrad 30 ist über eine Verbindungsgabel 34 und einen Zylinderstift 102 sowie eine Bolzenverbindung 101 mit dem einseitig angelenkten Bauteil 100, in diesem Fall einem Ausstellfenster eines Kraftfahrzeugs, verbunden. Ein Entriegelungshebel 33 sichert die Spindel 3 gegen eine Drehbewegung, so daß mit der Rotation der Antriebswelle des Antriebsmotors 1 über das Schraubengetriebe 2 die Rotationsbewegung in eine lineare Bewegung der Spindel 3 und damit in eine Öffnungs- oder Schließbewegung des einseitig angelenkten Bauteils 100 umgewandelt wird.

In der dargestellten Ausführungsform ermöglicht das Gleit- und Schwenklager 10 ein Verschwenken der Spindel 3 sowohl in der Zeichnungsebene als auch senkrecht dazu. Die senkrecht zur Zeichnungsebene verlaufende Drehbewegung des Schneckenrades 6 und damit der Spindel 3 ist jedoch praktisch nicht möglich, da in diesem Falle der Verzahnungseingriff der Schnecken/Schneckenradverzahnung gestört wäre. Zur Vermeidung einer Schwenkbewegung senkrecht zur Zeichnungsebene sind nicht näher dargestellte Verdrehnoppen vorgesehen, die die zweite Schwenkebene senkrecht zur Zeichnungsebene sperren.

Um gleichwohl eine Schwenkbewegung auch senkrecht zur Zeichnungsebene zu ermöglichen, kann der aus dem Antriebsmotor 1 und dem Schraubengetriebe 2 bestehende Linearantrieb beispielsweise an einem Scharnier oder dgl. angelenkt werden, das eine Drehbewegung in dieser zweiten Schwenkebene gestattet.

Im Falle eines Ausfalls des Linearantriebs ist eine manuelle Betätigung zum Öffnen oder Schließen des einseitig angelenkten Bauteils 100 möglich. In diesem Falle wird die mittels des Entriegelungshebels 33 gegen ein Verdrehen gesicherte Spindel 3 freigegeben, indem der Entriegelungshebel 33 um 90° verschwenkt wird, so daß der Vierkant 32, der die Spindel 3 mit dem Verstellrad 30 verbindet, aus der Arretierung gelangt. Durch Drehen des Verstellrades 30 wird das einseitig angelenkte Bauteil 100 verschwenkt und damit je nach Bedarf geöffnet oder geschlossen.

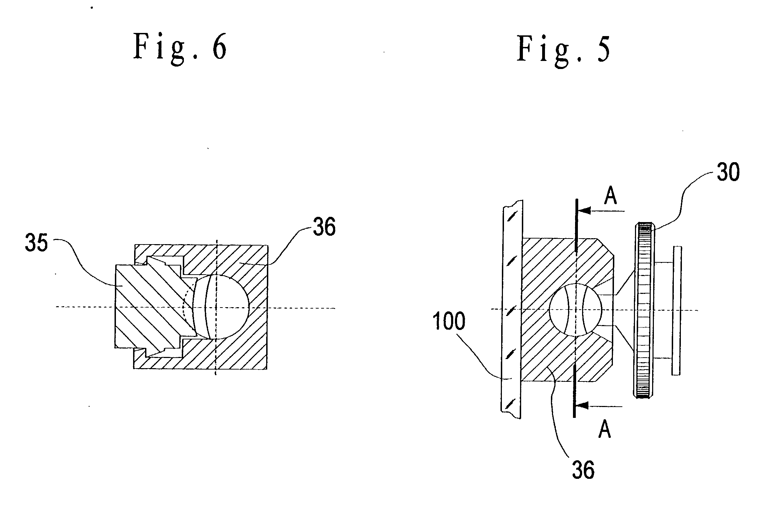

Eine Variante zur Notbetätigung bei Ausfall des Linearantriebs durch manuelle Betätigung ist in den Figuren 5 und 6 dargestellt.

In dieser Ausführungsform weist das Verstellrad 30 ein kugelförmiges Ende auf, das in einem mit dem einseitig angelenkten Bauteil 100 verbundenen Verbindungselement 36 gelagert ist. Durch ein seitlich in das Verbindungselement 36 eingeführtes Entriegelungs- und Verriegelungselement 35 wird die Spindel 3 im Normalbetrieb gegen Verdrehen gesichert. Bei Ausfall des Linearantriebs wird das Entriegelungs- und Verriegelungselement 35 aus der entsprechenden Ausnehmung des Verbindungselements 36 herausgezogen, so daß das Verstellrad 30 gedreht und damit die Spindel 3 beispielsweise zum Schließen eines Ausstellfensters als einseitig angelenktem Bauteil 100 geschlossen werden kann.

Neben den dargestellten beiden Varianten einer Notbetätigungseinrichtung sind auch andere Vorrichtungen zur Notbetätigung im Falle eines defekten Linearantriebs möglich. Insbesondere kann infolge der Schwenkbarkeit der Spindel 3 eine Schlitzaufnahme im Bereich der Verbindung mit dem einseitig angelenkten Bauteil vorgesehen werden, die im Normalbetrieb ein Verdrehen der Spindel verhindert. Zur manuellen Betätigung des einseitig angelenkten Bauteils kann die Spindel aus der entsprechenden Aufnahme herausgeschwenkt und beispielsweise ein Ausstellfenster eines Kraftfahrzeugs geöffnet oder geschlossen werden.

Die vorstehend dargestellten und beschriebenen Notbetätigungseinrichtungen sind sowohl für die vorstehend beschriebenen Ausführungsbeispiele entsprechend den Figuren 1 bis 4 als auch für die nachfolgenden Ausführungsbeispiele einsetzbar.

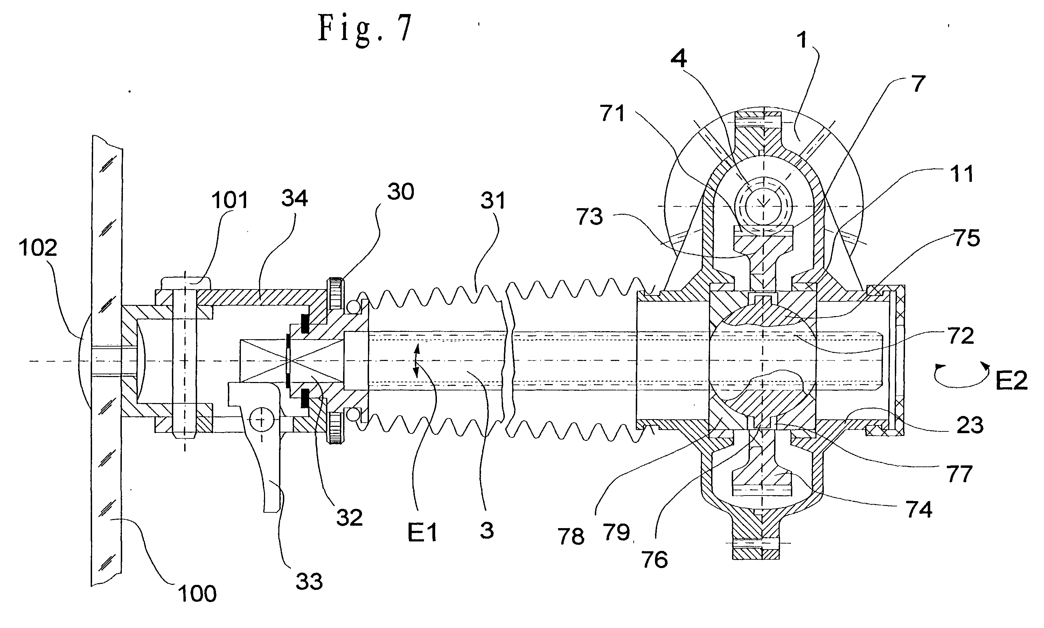

Die Anordnung gemäss Figur 7, welche nicht zum beanspruchten Gegenstand gehört, zeigt einen Längsschnitt durch ein Schraubengetriebe mit einer zweiteiligen Spindelmutter und einer in zwei Schwenkebenen verschwenkbaren Spindel 3.

In diesem Ausführungsbeispiel besteht die Spindelmutter aus einem zweiteiligen Schneckenrad 7, das aus den beiden formschlüssig miteinander verbindbaren Schneckenradhälften 73, 74 zusammengesetzt ist. Das Schneckenrad 7 weist innen zwei sphärische Flächen 78, 79 auf, zwischen denen sich eine Kalotte 75 befindet. Die Kalotte 75 weist geeignete Zapfen 76 auf, die in Freiräumen 77 zwischen den Schneckenradhälften 73, 74 angeordnet sind. Die Schneckenradhälften 73, 74 sind in zylindrischen Lagerbuchsen 11 gelagert und gegen das Getriebegehäuse 23 abgestützt. Die sphärischen Flächen 78, 79 der Schneckenradhälften 73, 74 bilden in Verbindung mit der kugelförmigen Außenfläche der Kalotte 75 ein integriertes Kalotten- und Gleitlager, das ein Verschwenken der als Schneckenrad mit integrierter Kalotte 7 ausgebildeten Spindelmutter und damit der Spindel 3 sowohl in der Zeichnungsebene als auch senkrecht zur Zeichnungsebene ermöglicht. Die beiden Schwenkebenen sind durch die Pfeile E1 und E2 angedeutet.

Die Drehmomentübertragung von den Schneckenradhälften 73, 74 zur Kalotte 75 erfolgt über die Zapfen 76, die in dem Freiraum 77 zur Winkelbeweglichkeit angeordnet sind. Das Antriebsmoment selbst wird über eine mit der Motorwelle verbundene Schnecke 4 auf die Außenverzahnung 71 des Schnekkenrades 7 übertragen, während die Umsetzung der Rotationsbewegung in die axiale Bewegung der Spindel 3 über das Innengewinde 72 der Kalotte 75 erfolgt. Die Schwenkbewegungen des Schraubengetriebes erfolgt dabei ausschließlich zwischen dem Schneckenrad 7 und der Kalotte 75.

Auch in diesem Ausführungsbeispiel ist eine Notbetätigungseinrichtung analog zur gemäß Figur 4 vorgesehen.

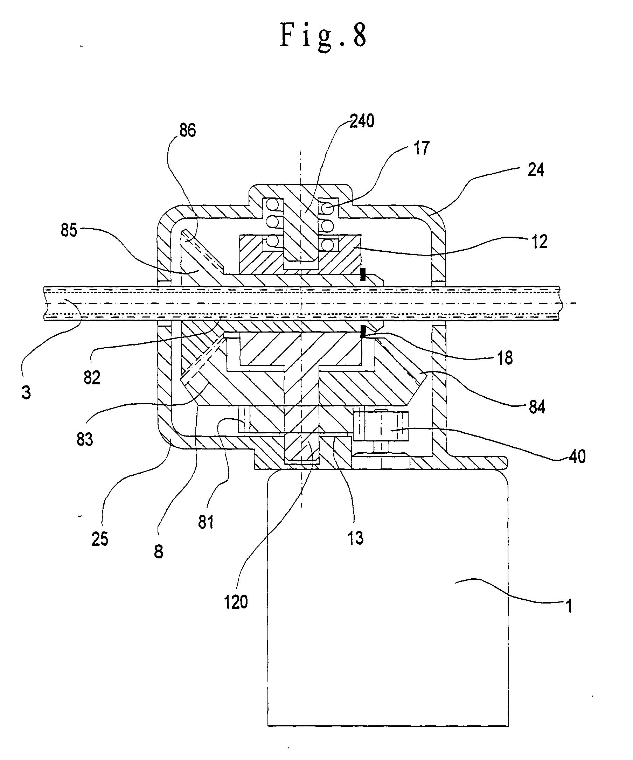

In Figur 8 ist ein Längsschnitt durch einen Linearantrieb mit verschwenkbarer Spindel 3 dargestellt, bei dem das Schraubengetriebe eine Spindelmutter 8 enthält, die aus zwei Kegelrädern 83, 85 besteht. Das erste Kegelrad 83 weist eine Außenverzahnung 81 auf, die mit einem Ritzel 40 kämmt, das mit der Motorwelle des Antriebsmotors 1 verbunden ist. Mit der Verzahnung 84 des ersten Kegelrades 83 befindet sich eine Verzahnung 86 eines zweiten Kegelrades 85 in Eingriff, das eine Durchgangsbohrung mit Innengewinde 82 zur Aufnahme der Spindel 3 aufweist. Das Gewinde kann rechts- oder linksgängig für rechte oder linke Getriebevarianten ausgeführt werden.

Das zweite Kegelrad 85 ist in einem Schwenkkörper 12 gelagert, der eine mit der Achse der Spindel 3 fluchtende Bohrung aufweist, in die die Achse des zweiten Kegelrades 85 eingesetzt und mittels eines Wellensicherungsringes 18 gegen axiale Verschiebungen in Längsrichtung gesichert ist. Der Schwenkkörper 12 weist einen Lagerbolzen 120 auf, der gleichzeitig die Lagerachse für das erste Kegelrad 83 bildet. Der Lagerbolzen 120 ist in einer Lageröffnung des Getriebegehäuseunterteils 25 des zweiteiligen Getriebegehäuses gelagert.

Auf der gegenüberliegenden Seite ist eine Lageröffnung des Schwenkkörpers 12 in einem Zapfen 240 gelagert, der vom Getriebegehäuseoberteil 24 nach innen gerichtet vorsteht. Zwischen dem Getriebegehäuseoberteil 24 und der Oberseite des Schwenkkörpers 12 ist eine Druckfeder 17 angeordnet, die das Spiel in der Kegelradstufe des Schraubengetriebes minimiert.

Der Abstand zum Getriebegehäuseunterteil 25 wird mittels einer Distanzscheibe 13 anlog zur Anordnung gemäß Figur 8 gewährleistet.

Das in Figur 8 dargestellte Ausführungsbeispiel erzielt einen höheren Wirkungsgrad durch die Verwendung von Stirnradstufen anstelle von Schneckenstufen, so daß geringere Antriebsleistungen des Antriebsmotors 1 erforderlich sind. Die Verschwenkung der Spindel 3 erfolgt senkrecht zur Zeichnungsebene und eine weitere, in der Zeichnungsebene liegende Verschwenkung kann durch eine entsprechende Anlenkung des Linearantriebs erfolgen.

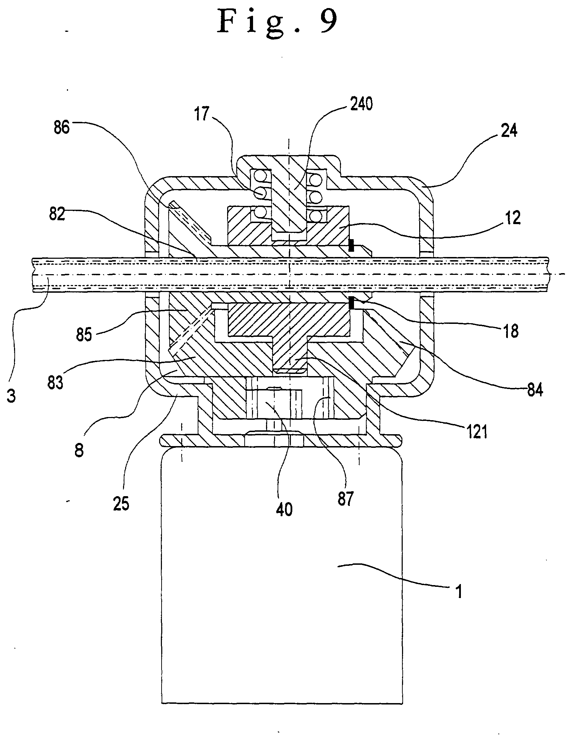

Das in Figur 9 dargestellte Ausführungsbeispiel entspricht weitestgehend dem konstruktiven Aufbau des Schraubengetriebes gemäß Figur 8. Es unterscheidet sich von diesem Ausführungsbeispiel nur durch ein modifiziertes erstes Kegelrad 83, das einen Innenzahnkranz 87 aufweist und dementsprechend auf dem Außendurchmesser in dem Getriebegehäuseunterteil 25 gelagert ist. Der Innenzahnkranz 87 steht in Eingriff mit einem Ritzel 40, das mit der Antriebswelle des Antriebsmotors 1 verbunden ist. Die Schwenklagerung der Spindel 3 erfolgt analog zur Ausführungsform gemäß Figur 8 durch einen drehbar gelagerten Schwenkkörper 12, der einen Führungszapfen 121 zur Lagerung des ersten Kegelrades 83 aufweist.

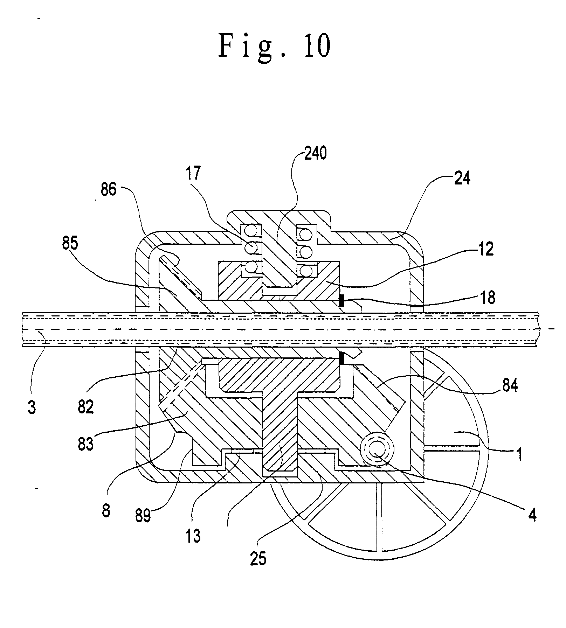

Das in Figur 10 dargestellte Ausführungsbeispiel stimmt ebenfalls weitestgehend mit dem Ausführungsbeispiel gemäß Figur 8 überein, im Unterschied hierzu erfolgt lediglich der Antrieb für das erste Kegelrad 83 in der ersten Stufe mittels eines Schneckentriebs mit einem um 90° gedrehten Antriebsmotor 1, dessen Motorwelle mit einer Schnecke 4 verbunden ist, die mit einer Schneckenverzahnung des ersten Kegelrades 83 kämmt.

Durch den speziellen Aufbau der vorstehend dargestellten und beschriebenen Schraubengetriebe wird die Voraussetzung für die Anordnung einfach konstruierter Endlagenschalter gewährleistet, die im Bedarfsfall die Schwenkbewegung der Spindelmutter bzw. der Spindel zur Endlagenabschaltung ausnutzen können.

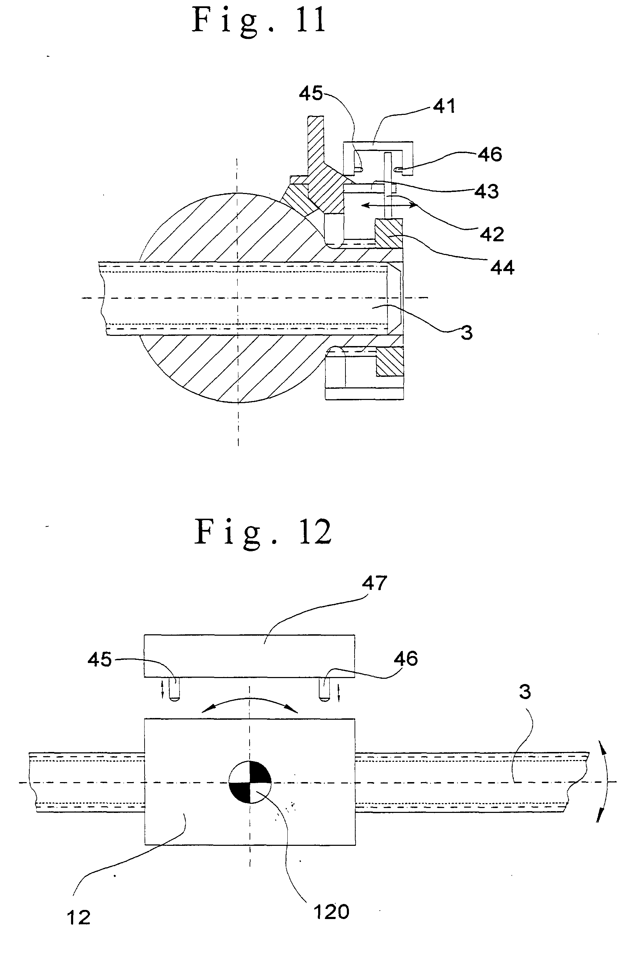

Figur 11 zeigt in schematischer Darstellung eine wegabhängige Motorabschaltung, die in allen vorstehend beschriebenen Ausführungsbeispielen einsetz- und integrierbar ist. Die in Figur 11 dargestellte Motorabschaltung besteht aus einem Feingewinde, das zusätzlich an einem Schneckenrad angebracht wird. Das Schneckenrad ist in einer Kalotte drehbar und schwenkbar gelagert. Das Feingewinde steht in Eingriff mit einer Spindelmutter 44, die mit einem Schaltzapfen 42 verbunden ist, der mittels eines Führungsschlitzes 43 so geführt wird, daß er zwischen den Endstellungen eines Endlagenschalters 41 bewegt und gegen Verdrehen gesichert wird. In den Endlagen betätigt der Schaltzapfen 42 am Endlagenschalter 41 angebrachte Schaltkontakte 45, 46, die eine Motorabschaltung bei entsprechender Endlagenstellung des zu betätigenden einseitig angelenkten Bauteils bewirken.

Die in Figur 12 schematisch dargestellte Endlagenabschaltung eignet sich insbesondere für die Ausführungsbeispiele, bei denen eine Schwenkbewegung in einer Ebene durchgeführt wird, beispielsweise bei den Ausführungsbeispielen gemäß den Figuren 1 und 8 bis 10.

Die Schwenkbewegungen, die beispielsweise der Schwenkkörper 12 gemäß den Ausführungsbeispielen der Figuren 8 bis 10 um einen Drehpunkt wie dem Bolzen 120 zusammen mit der Spindel 3 ausführt, werden in den Endlagen der Schwenkbewegung zur Betätigung der Endlagenkontakte 45, 46 des Endlagenschalters 47 ausgenutzt, durch die der Antriebsmotor bei Erreichen der Endstellungen des einseitig angelenkten Bauteils abgeschaltet wird.

Sowohl die in Figur 11 als auch die in Figur 12 dargestellte Endlagenabschaltung kann in einfacher Weise dadurch justiert werden, daß die Stellung des Endlagenschalters 41 bzw. 47 in bezug auf den Schaltzapfen 42 bzw. den Schwenkkörper 12 verändert wird.

## Patentansprüche

1. Vorrichtung zum Betätigen von einseitig angelenkten Bauteilen wie Ausstellfenster, Hubdächer oder dergleichen mittels eines Linearantriebs mit einem Motor (1) und einem Schraubengetriebe (2), das eine mit dem einseitig angelenkten Bauteil verbindbare Spindel (3) und eine Spindelmutter (5-8) enthält, die eine vom Motor (1) angetriebene Außenverzahnung (51; 61; 71; 81) und eine mit der Verzahnung der Spindel (3) in Eingriff stehende Innenverzahnung (52; 62; 72; 82) aufweist, wobei die Spindelmutter (5-8) in mindestens einer Ebene schwenkbar in einem Gehäuse (21, 22, 23, 25) des Schraubengetriebes (2) gelagert ist,
**gekennzeichnet durch**
eine einteilige Spindelmutter (5, 6), deren Außenverzahnung (51, 61) über mindestens einen dem Schwenkwinkel (α) entsprechenden Sektor kreisbogenförmig ausgebildet ist und mit einem mit der Motorwelle verbundenen Verzahnungselement (4) in Eingriff steht, wobei die Spindelmutter (6) eine sphärische Lagerfläche (60) aufweist, die in mehreren, am Getriebegehäuse (23) angeordneten Lagerbuchsen (10) abgestützt ist.

2. Vorrichtung nach Anspruch 1, **dadurch gekennzeichnet, daß** die Spindelmutter (5) in einem Drehkranz (9) angeordnet ist, der um eine senkrecht auf der Spindelachse stehenden Achse (A) schwenkbar im Getriebegehäuse (21, 22) gelagert ist.

3. Vorrichtung nach Anspruch 1, **gekennzeichnet durch** eine Verdrehsicherung, die die Bewegung der einteiligen Spindelmutter (6) in einer Ebene sperrt.

4. Vorrichtung zum Betätigen von einseitig angelenkten Bauteilen wie Ausstellfenster, Hubdächer oder dergleichen mittels eines Linearantriebs mit einem Motor (1) und einem Schraubengetriebe (2), das eine mit dem einseitig angelenkten Bauteil verbindbare Spindel (3) und eine Spindelmutter (83,85) enthält, die eine von einem mit der Motorwelle verbundenen Verzahnungselement (4,40) angetriebene Außenverzahnung (81) oder Innenzahnkrawz (87)(81,87) und eine mit der Verzahnung der Spindel (3) in Eingriff stehende Innenverzahnung (82) aufweist, wobei die Spindelmutter (83,85) in mindestens einer Ebene schwenkbar in einem Gehäuse (25) des Schraubengetriebes (2) gelagert ist,
**gekennzeichnet durch**
eine zweiteilige Spindelmutter (83,85), deren erstes Spindelmutterelement (83) die mit dem Verzahnungselement (4, 40) ein Eingriff stehende Verzahnung (81, 87, 88) und deren zweites Spindelmutterelement (85) die mit der Spindel (3) in Eingriff stehende Verzahnung (82) aufweist, und **durch** eine formschlüssige Verbindung beider Spindelmutterelemente (83, 85),
wobei das erste Spindelmutterelement aus einem ersten Kegelrad (83) besteht, dessen Kegelverzahnung (84) in Eingriff mit der Kegelverzahnung (86) eines das zweite Spindelmutterelement bildenden zweiten Kegelrades (85) steht, dessen Drehachse senkrecht zur Drehachse des ersten Kegelrades (83) angeordnet ist und das in einem Schwenkkörper (12) gelagert ist, dessen Achse mit der Achse des ersten Kegelrades (83) fluchtet.

5. Vorrichtung nach Anspruch 4, **dadurch gekennzeichnet, daß** der Schwenkkörper (12) schwenkbar an den Gehäusehälften (24) des Getriebegehäuses gelagert und mittels einer Druckfeder (17) an der einen Getriebegehäusehälfte (24) abgestützt ist.

6. Vorrichtung nach Anspruch 4 oder 5, **dadurch gekennzeichnet, daß** das erste Kegelrad (83) eine zylindrische Außen- oder Innenverzahnung (81) aufweist, die mit einem mit der Motorwelle verbundenen Ritzel (40) kämmt.

7. Vorrichtung nach Anspruch 4 oder 5, **dadurch gekennzeichnet, daß** das erste Spindelmutterelement aus einem ersten Kegelrad (83) mit integriertem Schneckenrad (88) besteht, dessen Schneckenverzahnung (89) mit einer mit der Motorwelle verbundenen Schnecke (4) kämmt.

8. Vorrichtung nach Anspruch 1 oder 4, **dadurch gekennzeichnet, daß** die Spindelmutter (5 - 8) in einem am Getriebegehäuse (21, 22, 23, 25) abgestützten Gleit- und/oder Schwenklager (9 - 12) angeordnet ist.

9. Vorrichtung zum Betätigen von einseitig angelenkten Bauteilen wie Ausstellfenster, Hubdächer oder dergleichen mittels eines Linearantriebs mit einem Motor (1) und einem Schraubengetriebe (2), das eine mit dem einseitig angelenkten Bauteil verbindbare Spindel (3) und eine Spindelmutter (5) enthält, die eine vom Motor (1) angetriebene Außenverzahnung (51) und eine mit der Verzahnung der Spindel (3) in Eingriff stehende Innenverzahnung (52) aufweist, wobei die Spindelmutter (5) in mindestens einer Ebene schwenkbar in einem Gehäuse (21, 22) des Schraubengetriebes (2) gelagert ist,
**gekennzeichnet durch**
eine Spindelmutter (5), deren Außenverzahnung (51) über mindestens einen dem Schwenkwinkel (α) entsprechenden Sektor kreisbogenförmig ausgebildet ist, mit einem mit der Motorwelle verbundenen Verzahnungselement (4) in Eingriff steht und in einem Drehkranz (9) angeordnet ist, der um eine senkrecht auf der Spindelachse stehenden Achse (A) schwenkbar im Getriebegehäuse (21, 22) gelagert ist und der entweder zweiteilig und konisch oder zylindrisch ausgebildet ist, wobei beim Zusammenbau die die Spindelmutter (5) umfassenden beiden Teile des Drehkranzes (9) bei getrenntem Getriebegehäuse (21, 22) zusammen mit der Spindelmutter (5) in die eine Gehäusehälfte (22) einsetzbar sind.

10. Vorrichtung nach mindestens einem der vorangehenden Ansprüche, **gekennzeichnet durch** eine Notbetätigungseinrichtung, mittels der ein mit der Spindel (3) kraft- und/oder formschlüssig sowie mit dem einseitig angelenkten Bauteil (100) verbundenes Verstellrad (30) zur manuellen Betätigung freigebbar ist.

11. Vorrichtung nach Anspruch 10, **dadurch gekennzeichnet, daß** die Notbetätigungseinrichtung einen Entriegelungshebel (33) enthält, der im Automatikbetrieb an einem mit der Spindel (3) verbundenen und formschlüssig in das Verstellrad (30) eingesetzten Vierkant anliegt und zum manuellen Betrieb aus der Anlagestellung zur Freigabe des Vierkants verschwenkbar ist.

12. Vorrichtung nach Anspruch 10, **dadurch gekennzeichnet, daß** die Notbetätigungseinrichtung ein Entriegelungselement (35) aufweist, das im Automatikbetrieb in eine Aufnahme eingesetzt ist und an einem kugelförmigen Ende der Spindel (3) oder eines mit der Spindel (3) verbundenen Verstellrades (30) kraft- und/oder formschlüssig anliegt und zum manuellen Betrieb aus der Anlagestellung zur Freigabe der Spindel (3) bzw. des Verstellrades (30) aus der Aufnahme herausziehbar ist.

13. Vorrichtung nach mindestens einem der vorangehenden Ansprüche, **dadurch gekennzeichnet, daß** die Spindelmutter (5 - 8), die Spindel (3) oder ein mit der Spindelmutter (5 - 8) verbundenes Verschwenkelement (9, 12) mit einer Einrichtung zur Endlagenabschaltung (41 - 47) verbunden ist.

14. Vorrichtung nach mindestens einem der vorangehenden Ansprüche, **dadurch gekennzeichnet, daß** der Linearantrieb (1, 2) in mindestens einer Ebene verschwenkbar angelenkt oder kardanisch aufgehängt ist.

## Claims

1. Device for actuating components pivotally attached on one side, such as ventilator windows, lifting roofs or the like by means of a linear drive having a motor (1) and a helical gearing (2) which contains a spindle (3) connectable to the component which is pivotally attached on one side, and a spindle nut (5-8) which has an external spline (51; 61; 71; 81) driven by the motor (1), and internal spline (52; 62; 72; 82) engaging with the teeth of the spindle (3), wherein the spindle nut (5-8) is mounted to pivot in at least one plane in a housing (21, 22, 23, 25) of the helical gearing,
**characterised by**
a one-piece spindle nut (5, 6) whose external spline (51, 61) is formed in a circular arc over at least one sector corresponding to the pivotal angle (α) and engages with a toothed element (4) connected to the motor shaft, wherein the spindle nut (6) has a spherical bearing face (60) which is supported in several bearing bushes (10) mounted on the gear housing (23).

2. Device according to claim 1, **characterised in that** the spindle nut (5) is mounted in a rotational rim (9) which is mounted to swivel in the gear housing (21, 22) about an axis (A) perpendicular to the spindle axis .

3. Device according to claim 1, **characterised by** an anti-rotational lock which locks the movement of the one-piece spindle nut (6) in one plane.

4. Device for actuating components pivotally mounted on one side, such as ventilator windows, lifting roofs or the like by means of a linear drive having a motor (1) and a helical gearing (2) which contains a spindle (3) connected to the construction part which is pivotally attached on one side, and a spindle nut (83, 85) which has an external spline (81) or internal toothed rim (87) driven by a toothed element (4, 40) connected to the motor shaft, and an internal spline (82) engaging with the toothing of the spindle (3), wherein the spindle nut (83, 85) is mounted to swivel in at least one plane in a housing (25) of the helical gearing (2),
**characterised by**
a two-part spindle nut (83, 85) whose first spindle nut element (83) has the teeth (81, 87, 88) engaging with the toothed element (4, 40), and whose second spindle nut element (85) has the teeth (82) engaging with the spindle (3), and by a positive locking connection between the two spindle nut elements (83, 85),
wherein the first spindle nut element consists of a first coned wheel (83) whose cone teeth (84) engage with the cone teeth (86) of a second coned wheel (85) forming the second spindle nut element whose axis of rotation is mounted perpendicular to the rotational axis of the first coned wheel (83) and which is mounted in a swivel body (12) whose axis aligns with the axis of the first coned wheel (83).

5. Device according to claim 4, **characterised in that** the swivel body (12) is mounted to swivel on the housing halves (24) of the gear housing and is supported by means of a compression spring (17) on the one gear housing half (24).

6. Device according to claim 4 or 5, **characterised in that** the first coned wheel (83) has a cylindrical external or internal spline (81) which meshes with a pinion (40) which is connected to the motor shaft.

7. Device according to claim 4 or 5, **characterised in that** the first spindle nut element consists of a first coned wheel (83) with integrated worm wheel (88) whose worm gearing (89) meshes with a worm (4) connected to the motor shaft.

8. Device according to claim 1 or 4, **characterised in that** the spindle nut (5-8) is mounted in a slide and/or swivel bearing (9-12) supported on the gear housing (21, 22, 23, 25).

9. Device for actuating components pivotally attached on one side, such as ventilator windows, lifting roofs or the like by means of a linear drive with a motor (1) and a helical gearing (2) which contains a spindle (3) connectable to the component pivotally attached on one side, and a spindle nut (5) which has an external spline (51) driven by the motor (1) and an internal spline (52) engaging with the toothing of the spindle (3) wherein the spindle nut (5) is mounted to swivel in at least one plane in a housing (21, 22) of the helical gearing (2),
**characterised by**
a spindle nut (5) whose external spline (51) is designed in a circular arc over at least one sector corresponding to the swivel angle (α), engages with a toothed element (4) connected to the motor shaft and is mounted in a rotational rim (9) which is mounted to swivel in the gear housing (21, 22) about an axis (A) perpendicular to the spindle axis and which is designed either in two parts and conical or cylindrical wherein during assembly the two parts of the rotational rim (9) surrounding the spindle nut (5) in the case of a separated gear housing (21, 22) can be inserted together with the spindle nut (5) into the one housing half (22).

10. Device according to at least one of the preceding claims, **characterised by** an emergency actuating device by means of which an adjusting wheel (30) which is connected to the spindle (3) with force and/or positive locking engagement as well as to the component (100) pivotally attached on one side can be released for manual actuation.

11. Device according to claim 10, **characterised in that** the emergency actuating device contains an unlocking lever (33) which in automatic operation bears against a square which is connected to the spindle (3) and positively fits into the adjusting wheel (30), and for manual operation can be swivelled out from the contact bearing position to release the square.

12. Device according to claim 10, **characterised in that** the emergency actuating device has an unlocking element (35) which in automatic operation is inserted into a socket and bears with force locking and/or positive locking engagement against a spherical shaped end of the spindle (3) or of an adjusting wheel (30) connected to the spindle (3), and for manual operation can be withdrawn from the contact bearing position to release the spindle (3) or the adjusting wheel (30) from the socket.

13. Device according to at least one of the preceding claims, **characterised in that** the spindle nut (5-8), the spindle (3) or a swivel element (9, 12) connected to the spindle nut (5-8) is connected to a device for final position disconnection (41-47).

14. Device according to at least one of the preceding claims, **characterised in that** the linear drive (1, 2) is attached for pivotal movement in at least one plane or is hung by a Cardan joint.

## Revendications

1. Dispositif pour actionner des éléments de construction articulés d'un côté, comme des fenêtres ouvrantes, des toits levants ou similaire, au moyen d'un entraînement linéaire, comprenant un moteur (1) et une transmission à vis (2) qui contient une broche (3) pouvant être reliée à l'élément de construction articulé d'un côté, et un écrou à broche (5-8) présentant une denture extérieure (51 ; 61 ; 71 ; 81) entraînée par le moteur (1) et une denture intérieure (52 ; 62 ; 72 ; 82) en engrènement avec la denture de la broche (3), l'écrou à broche (5-8) étant monté en pivotement dans au moins un plan dans un boîtier (21, 22, 23, 25) de la transmission à vis (2), **caractérisé par** un écrou à broche en un seul tenant (5, 6) dont la denture extérieure (51, 61) est réalisée en forme d'arc de cercle sur au moins un secteur correspondant à l'angle de pivotement (α) et est en engrènement avec un élément à denture (4) relié à l'arbre de moteur, l'écrou à broche (6) présentant une surface de montage sphérique (60) qui est soutenue dans plusieurs douilles de montage (10) agencées sur le boîtier de transmission (23).

2. Dispositif selon la revendication 1, **caractérisé en ce que** l'écrou à broche (5) est agencé dans une couronne rotative (9) qui est montée dans le boîtier de transmission (21, 22) en pivotement autour d'un axe (A) perpendiculaire à l'axe de broche.

3. Dispositif selon la revendication 1, **caractérisé par** une sécurité anti-rotation qui verrouille le mouvement de l'écrou à broche en un seul tenant (6) dans un plan.

4. Dispositif pour actionner des éléments de construction articulés d'un côté, comme des fenêtres ouvrantes, des toits levants ou similaire, au moyen d'un entraînement linéaire, comprenant un moteur (1) et une transmission à vis (2) qui contient une broche (3) pouvant être reliée à l'élément de construction articulé d'un côté, et un écrou à broche (83, 85) présentant une denture extérieure (81) ou une couronne à denture intérieure (87) entraînée par un élément à denture (4, 40) relié à l'arbre de moteur, et une denture intérieure (82) en engrènement avec la denture de la broche (3), l'écrou à broche (83, 85) étant monté en pivotement dans au moins un plan dans un boîtier (21, 22, 23, 25) de la transmission à vis (2), **caractérisé par** :
- un écrou à broche (83, 85) en deux parties, dont le premier élément d'écrou à broche (83) présente la denture (81, 87, 88) en engrènement avec l'élément à denture (4, 40) et dont le second élément d'écrou à broche (85) présente la denture (82) en engrènement avec la broche (3) ; et
- une liaison par coopération de formes des deux éléments d'écrou à broche (83, 85),
dispositif dans lequel le premier élément d'écrou à broche est constitué par une première roue conique (83) dont la denture conique (84) est en engrènement avec la denture conique (86) d'une seconde roue conique (85) formant le second élément d'écrou à broche, dont l'axe de rotation est agencé perpendiculairement à l'axe de rotation de la première roue conique (83), et qui est montée dans un corps pivotant (12) dont l'axe est en alignement avec l'axe de la première roue conique (83).

5. Dispositif selon la revendication 4, **caractérisé en ce que** le corps pivotant (12) est monté en pivotement sur les moitiés de boîtier (24) du boîtier de transmission et est soutenu sur l'une des moitiés (24) du boîtier de transmission au moyen d'un ressort de compression (17).

6. Dispositif selon l'une ou l'autre des revendications 4 et 5, **caractérisé en ce que** la première roue conique (83) présente une denture cylindrique extérieure ou intérieure (81) qui engrène avec un pignon (40) relié à l'arbre de moteur.

7. Dispositif selon l'une ou l'autre des revendications 4 et 5, **caractérisé en ce que** le premier élément d'écrou à broche est constitué par une première roue conique (83) avec couronne de vis intégrée (88) dont la denture (89) engrène avec une vis tangente (4) reliée à l'arbre de moteur.

8. Dispositif selon l'une ou l'autre des revendications 1 et 4, **caractérisé en ce que** l'écrou à broche (5-8) est agencé dans un palier à glissement (9-12) et/ou pivotant soutenu sur le boîtier de transmission (21, 22, 23, 25).

9. Dispositif pour actionner des éléments de construction articulés d'un côté, comme des fenêtres ouvrantes, des toits levants ou similaire, au moyen d'un entraînement linéaire, comprenant un moteur (1) et une transmission à vis (2) qui contient une broche (3) pouvant être reliée à l'élément de construction articulé d'un côté et un écrou à broche (5) présentant une denture extérieure (51) entraînée par le moteur (1) et une denture intérieure (52) en engrènement avec la denture de la broche (3), l'écrou à broche (5) étant monté en pivotement dans au moins un plan dans un boîtier (21, 22) de la transmission à vis (2), **caractérisé par** un écrou à broche (5) dont la denture extérieure (51) est réalisée en forme d'arc de cercle sur au moins un secteur correspondant à l'angle de pivotement (α), est en engrènement avec un élément à denture (4) relié à l'arbre de moteur et est agencée dans une couronne rotative (9) qui est montée dans le boîtier de transmission (21, 22) en pivotement autour d'un axe (A) perpendiculaire à l'axe de broche, et qui est réalisée soit en deux pièces et conique, soit cylindrique et, lors de l'assemblage, les deux pièces de la couronne dentée (9) qui entourent l'écrou à broche (5) peuvent être mises en place, conjointement avec l'écrou à broche (5), dans l'une des moitiés de boîtier (22), alors que le boîtier de transmission (21, 22) est séparé.

10. Dispositif selon l'une au moins des revendications précédentes, **caractérisé par** un dispositif d'actionnement de secours au moyen duquel une roue de déplacement (30) reliée à la broche (3) par coopération de forces et/ou de formes ainsi qu'à l'élément de construction (100) articulé d'un côté peut être libérée pour l'actionnement manuel.

11. Dispositif selon la revendication 10, **caractérisé en ce que** le dispositif d'actionnement de secours comporte un levier de déverrouillage (33) qui, dans le mode automatique, vient en contact sur un carré relié à la broche (3) et mis en place par coopération de formes dans la roue de déplacement (30), et qui peut être pivoté hors de la position de contact afin de libérer le carré pour le mode manuel.

12. Dispositif selon la revendication 10, **caractérisé en ce que** le dispositif d'actionnement de secours présente un élément de déverrouillage (35) qui, dans le mode automatique, est mis en place dans un logement et qui vient en contact sur une extrémité de forme sphérique de la broche (3) ou d'une roue de déplacement (30) reliée à la broche (3) par coopération de forces et/ou de formes, et qui peut être retiré hors du logement depuis la position de contact afin de libérer la broche (3) ou la roue de déplacement (30) pour le mode manuel.

13. Dispositif selon l'une au moins des revendications précédentes, **caractérisé en ce que** l'écrou à broche (5-8), la broche (3) ou un élément pivotant (9, 12) relié à l'écrou à broche (5-8) est relié(e) à un dispositif pour la déconnexion de fin de course (41 - 47).

14. Dispositif selon l'une au moins des revendications précédentes, **caractérisé en ce que** l'entraînement linéaire (1, 2) est monté en articulation en pivotement dans au moins un plan ou est suspendu à la cardan.
